# EUROPEAN PATENT APPLICATION

(11) **EP 4 397 917 A1**
(43) Date of publication of application: **10.07.2024**
(21) Application number: 21955704.8
(22) Date of filing: 25.10.2021
(51) Int. Cl.: F24F 11/64, F24F 11/52, F24F 11/49

(54) **MOUNTING PROMPTING METHOD, AIR CONDITIONER, AND COMPUTER-READABLE STORAGE MEDIUM**

(30) Priority: 31.08.2021 CN 202111023491
(71) Applicant: Foshan Shunde Midea Electric Science and Technology Co., Ltd., Foshan, Guangdong 528311 (CN); GD Midea Air-Conditioning Equipment Co., Ltd., Foshan, Guangdong 528311 (CN)
(72) Inventor: CHEN, Weicheng, Foshan, Guangdong 528311 (CN); WENG, Jinlian, Foshan, Guangdong 528311 (CN)
(74) Representative: Ran, Handong
(86) International application number: PCT/CN2021/126101
(87) International publication number: WO 2023/029175

(57) **Abstract**

A mounting prompting method, an air conditioner, and a computer-readable storage medium. The method comprises: acquiring first module information and second module information, the first module information being information of a first function module to be mounted that corresponds to a preset region of an air conditioner, and the second module information being information of a second function module currently mounted in a preset region of the air conditioner; determining recommended mounting positions according to the first module information and the second module information, the recommended mounting positions comprising the positions in the preset region recommended for mounting the first function module and the second function module, respectively; and outputting mounting prompting information according to the recommended mounting positions.

## Description

### CROSS-REFERENCE TO RELATED APPLICATIONS

The present application claims priority to Chinese Patent Application No. 202111023491.8, filed on August 31, 2021, the entire contents of which are incorporated herein by reference.

### TECHNICAL FIELD

The present application relates to the technical field of air conditioners, and in particular to an installation prompting method, an air conditioner and a computer readable storage medium.

### BACKGROUND

With the development of economy and technology, air conditioners are used more and more widely, and the performance of air conditioners is constantly optimized. Some air conditioners will provide an installation area, and users can choose the functional modules they need to purchase and install them in the installation area, so that the functions of the air conditioner can meet the user's needs.

At present, after users purchase functional modules, they generally install them anywhere in the installation area, which may easily lead to inaccurate installation locations of the functional modules, resulting in poor performance of the air conditioner in improving indoor air quality.

### SUMMARY

The main purpose of the present application is to provide an installation prompting method, an air conditioner and a computer readable storage medium, aiming to improve the accuracy of the installation location of functional modules on the air conditioner to improve the effect of the air conditioner in improving indoor air quality.

In order to achieve the above objective, the present application provides an installation prompting method, including:
obtaining first module information and second module information, the first module information is information of a first functional module to be installed in a preset area of an air conditioner, and the second module information is information of a second functional module currently installed in the preset area;
determining a recommended installation location according to the first module information and the second module information, the recommended installation location includes installation locations respectively recommended by the first functional module and the second functional module in the preset area; and
outputting installation prompting information according to the recommended installation location.

In some embodiments, the installation prompting method further includes:
obtaining payment status information of the first functional module, the payment status information is configured to represent whether a purchase amount of the first functional module is paid successfully; and
in response to the payment status information indicating that the purchase amount of the first functional module is paid successfully, performing the obtaining the first module information and the second module information.

In some embodiments, after the obtaining the payment status information of the first functional module, the method further includes:
in response to the payment status information indicating that the purchase amount of the first functional module is paid successfully, displaying the payment status information and a request interface corresponding to the recommended installation location; and
in response to a request instruction of the recommended installation location input through the request interface, performing the obtaining the first module information and the second module information.

In some embodiments, the installation prompting method further includes:
obtaining installation status information of the preset area, wherein the installation status information is configured to represent whether there is a free location in the preset area that allows installing a functional module;
in response to the installation status information indicating that the preset area has the free location, performing the obtaining the first module information and the second module information; and
in response to the installation status information indicating that the preset area fails to have the free location, outputting prompting information corresponding to the installation status information to make the preset area have the free location, and returning to perform the obtaining the installation status information of the preset area.

In some embodiments, the first module information includes a first functional type of the first functional module, and the second module information includes a second functional type of the second functional module;
the determining the recommended installation location according to the first module information and the second module information includes:
determining the recommended installation location based on the first functional type and the second functional type.

In some embodiments, the determining the recommended installation location based on the first functional type and the second functional type includes:
if the first functional type and the second functional type include a humidification type and a purification type, determining a first target location as a first recommended installation location of one of the first functional module and the second functional module that belongs to the humidification type, and determining a second target location as a second recommended installation location of one of the first functional module and the second functional module that belongs to the purification type;
the recommended installation location includes the first recommended installation location and the second recommended installation location, and a distance between the first target location and an air outlet of the air conditioner is smaller than a distance between the second target location and the air outlet.

In some embodiments, after the outputting the installation prompting information according to the recommended installation location, the method further includes:
obtaining user feedback information corresponding to the installation prompting information;
determining a reference installation location of the first functional module and the second functional module in the preset area according to the recommended installation location and the user feedback information;
if both the first functional module and the second functional module are installed in the preset area, detecting an actual installation location corresponding to the first functional module and the second functional module; and
if the reference installation location fails to match the actual installation location, outputting an alarm message.

In some embodiments, the determining the reference installation location of the first functional module and the second functional module in the preset area according to the recommended installation location and the user feedback information includes:
if the user feedback information includes location adjustment information corresponding to the recommended installation location, obtaining the reference installation location after adjusting the recommended installation location according to the location adjustment information; and
if the user feedback information does not include location adjustment information corresponding to the recommended installation location, determining the recommended installation location as the reference installation location.

In addition, in order to achieve the above objective, the present application further provides an air conditioner including a memory, a processor and an installation prompting program stored on the memory and executable on the processor. When the installation prompting program is executed by the processor, steps of the above-mentioned installation prompting method are implemented.

In addition, in order to achieve the above objective, the present application further provides a computer readable storage medium. An installation prompting program stored on the computer readable storage medium, when the installation prompting program is executed by a processor, steps of the above-mentioned installation prompting method are implemented.

The present application provides an installation prompting method. In the method, a recommended installation location is determined according to the information of a first functional module to be installed in a preset area of an air conditioner and the information of a second functional module currently installed in the preset area. The installation prompting information is output accordingly, so that the user can know how to accurately install the first functional module and the second functional module based on the installation prompting information, which is conducive to improving the performance of each functional module. The accuracy of the installation location on the air conditioner enables the performance of each functional module to coordinate with each other, and effectively improves the effect of the air conditioner in improving indoor air quality.

### BRIEF DESCRIPTION OF THE DRAWINGS

FIG. 1 is a schematic view of a hardware structure of an air conditioner according to some embodiments of the present application.
FIG. 2 is a flow chart view of an installation prompting method according to some embodiments of the present application.
FIG. 3 is a flow chart view of the installation prompting method according to some other embodiments of the present application.
FIG. 4 is a flow chart view of the installation prompting method according to still some other embodiments of the present application.
FIG. 5 is a flow chart view of the installation prompting method according to yet some other embodiments of the present application.

The implementation of the purpose, functional characteristics and advantages of the present application will be further described with reference to the attached drawings and in combination with embodiments.

### DETAILED DESCRIPTION OF THE EMBODIMENTS

It should be understood that the specific embodiments described here are only used to explain the present application and are not used to limit the present application.

In the present application, the technical solution includes: obtaining first module information and second module information, the first module information is information of a first functional module to be installed in a preset area of an air conditioner, and the second module information is information of a second functional module currently installed in the preset area; determining a recommended installation location according to the first module information and the second module information, the recommended installation location includes installation locations respectively recommended by the first functional module and the second functional module in the preset area; and outputting installation prompting information according to the recommended installation location.

In the related art, after users purchase functional modules, they generally install them at any location within the installation area, which may easily lead to inaccurate installation locations of the functional modules, resulting in poor performance in improving indoor air quality of the air conditioner.

The present application provides the above solution, aiming to improve the accuracy of the installation location of the functional module on the air conditioner, so as to improve the effect of the air conditioner in improving indoor air quality.

The present application provides an air conditioner. In some embodiments, the air conditioner is a cabinet air conditioner. In other embodiments, the air conditioner may also be a wall-mounted air conditioner, a window air conditioner, a ceiling air conditioner, etc.

In these embodiments, the air conditioner includes a casing and a functional module 1. An air duct is provided in the casing. The air duct may specifically include an indoor return air duct and/or a fresh air duct. The functional module 1 is installed in the air duct to regulate the air entering the air duct. A fan can be installed in the air duct, and the fan can drive air into the air duct and blow it out from the air duct.

In these embodiments, the functional module 1 is an air conditioning module. The functional module 1 can includes one or more of the functional module with air conditioning function, such as a heat exchange module, a purification module (such as an activated carbon module, a plasma sterilization module), a humidity adjustment module (such as a dehumidification module and/or humidification module), an oxygenation module (such as a positive and negative ion module), a fragrance module, a heating module (such as electric auxiliary heating module, etc.) and/or a filter module (such as a high efficiency particulate air (HEPA) filter, and a formaldehyde filter, etc.). The functional module 1 can be fixedly installed in the air duct, or can be detachably installed in the air duct. In other embodiments, the functional module 1 can also be other modules without air conditioning functions, such as modules with detection functions.

In these embodiments, the functional module 1 can be detachably installed in a preset area in the air duct. The functional module 1 can be installed in a preset area through plugging, snapping or other methods. An installation base may be provided in a preset area of the air duct. The installation base may include one or more installation parts, and each installation part may be detachably connected to the functional module 1. For example, the installation part is an installation slot, and the functional module 1 and the installation slot can be detachably connected through plug-fitting. Based on this, the user can install the required functional modules 1 into the air duct based on actual usage requirements to regulate the air flowing in the air duct. The installation base can be fixed in the air duct before the air conditioner leaves the factory, and the functional module 1 can be installed on the installation base before the air conditioner leaves the factory; or the functional module 1 does not need to be installed on the installation base, and the user can purchase the functional module 1 according to actual needs.

In some embodiments, in order to realize automatic identification of the functional module 1 currently installed in the air duct, a detection module 2 (such as a radio frequency antenna, camera, etc.) can be provided at the position corresponding to the installation base in the air duct, and the functional module 1 is provided with an identification part (such as radio frequency identification (RFID)) card, barcode, quick response (QR) code, etc.) carrying identification information, the identification information carried by the identification part corresponding to different functional modules 1 is different. Based on this, identification information is carried out through the detection signal of the detection module 2, which enables the acquisition of information from different functional modules 1. Specifically, the identification information may be functional type information used to identify the functional module 1, information identifying the installation target location of the functional module 1, information identifying the copyright of the functional module 1, and/or information identifying the version of the functional module 1, etc. Based on this, through the identification of the detection signal of the detection module 2, based on the identification results, it can be determined whether there is a functional module 1 installed in the air duct, the type of the installed functional module 1, the position of the installed functional module 1, whether the installed position is accurate, whether the installed version is correct, whether the installed functional module 1 is genuine and other information.

Furthermore, the preset area is divided into a plurality of sub-areas for detachable installation of a plurality of functional modules 1. Based on this, the installation base may include an installation part, and each installation part is provided with a detection module 2t. The area occupied by each installation part can be determined as a sub-area, and the detection area of each detection module 2 covers the corresponding sub-area to detect relevant information of the functional module 1 therein. Specifically, different preset identification information corresponding to different functional modules 1 can be stored in advance. If the detection signal of the detection module 2 has a signal that matches any preset identification information, it indicates that there is a functional module 1 in the corresponding sub-area corresponding to the detection module 2. If the detection signal does not contain any signal that matches the preset identification information, it indicates that the functional module 1 is not installed in the sub-area corresponding to the detection module 2.

In some embodiments, the plurality of preset identification information can be associated with different sub-areas in advance. For example, in order to ensure the adjustment effect and the durability of the functional module 1, the relative positions of the plurality of different functional modules 1 can be fixed in advance to form a plurality of preset installation locations of the functional module 1 in the air duct, different sub-areas can be associated with corresponding preset identification information based on the preset installation location. Based on this, the detection modules 2 in different sub-areas are respectively associated with different preset identification information. The detection signal of the detection module 2 can be analyzed based on the preset identification information associated with the detection module 2, and it can be determined whether the position of the functional module 1 is accurate. For example, in order to prevent modules with high dryness requirements (such as adjustment modules that require electricity and filters) from being affected by moisture, the dehumidification module can be provided closest to the air inlet, the humidification module can be provided farthest from the air inlet. other functional modules can be provided between the dehumidification module and the humidification module in advance. Based on this, the detection module 2 corresponding to the first sub-area closest to the air inlet can be associated with the preset identification information of the dehumidification module, the detection module 2 corresponding to the second sub-area most far away from the air inlet can be associated with the preset identification information of the humidification module, and the preset identification information corresponding to other functional modules can be respectively associated with the sub-areas between the first sub-area and the second sub-area. In addition, each sub-area between the first sub-area and the second sub-area is associated with the preset identification information corresponding to all other functional modules, so that other functional modules can be freely installed between the first sub-area and the second sub-area, which is convenient for user operation.

In some embodiments, the air conditioner may also include a smart large screen 3. The smart large screen 3 is installed in the casing. The smart large screen 3 can be used for human-computer interaction, so that the user can control the operation of the air conditioner, purchase necessary functional module 1 or obtain prompting information related to the operation of the air conditioner, etc. based on human-computer interaction.

Furthermore, the air conditioner also includes a control device. The above-mentioned detection module 2, the functional module 1 installed in the air duct, and the smart large screen 3 can be connected to the control device.

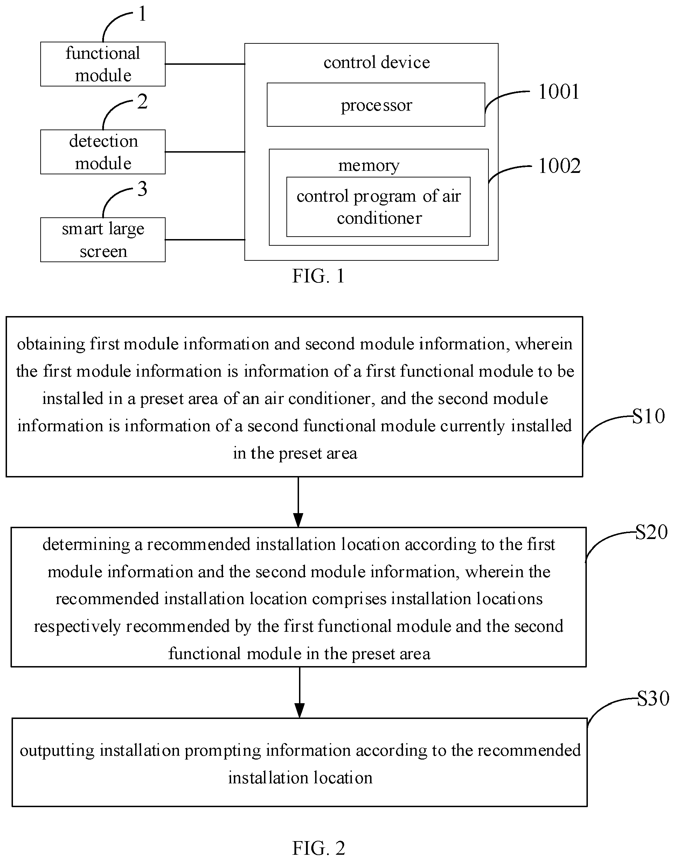

In these embodiments of the present application, as shown in FIG. 1, the control device of the air conditioner includes: a processor 1001 (such as a central processing unit (CPU)), a memory 1002, etc. The memory 1002 may be a high-speed random access memory (RAM) or a stable memory (non-volatile memory), such as a disk memory. The memory 1002 may be a storage device independent of the aforementioned processor 1001.

Those skilled in the art can understand that the device structure shown in FIG. 1 does not constitute a limitation of the device, and may include more or fewer components than shown, or combine certain components, or arrange different components.

As shown in FIG. 1, a memory 1002 as a computer-readable storage medium may include a control program for an air conditioner. In the device shown in FIG. 1, the processor 1001 can be used to call the control program of the air conditioner stored in the memory 1002 and execute the relevant steps of the control method of the air conditioner in the following embodiments.

In some embodiments, the present application provides an installation prompting method, which is applied to the above-mentioned air conditioner.

As shown in FIG. 2, in some embodiments, the installation prompting method provided in the present application includes:
S10, obtaining first module information and second module information, the first module information is information of a first functional module to be installed in a preset area of an air conditioner, and the second module information is information of a second functional module currently installed in the preset area;

In these embodiments, the preset area is an area within the air duct of the air conditioner, and both the first functional module and the second functional module are air conditioning modules that can be used to regulate air flowing through the air duct. In other embodiments, the first functional module or the second functional module may also be a detection module for monitoring air duct conditions.

The first functional module and the second functional module may be modules of the same type or different types. The number of the second functional module may be one or more than one. When there is more than one second functional module in the preset area, the types of the more than one second functional module may be the same or different.

The first module information and the second module information are specifically information related to the functions implemented by the first functional module and the second functional module, such as functional type, module usage time, module life and/or environmental parameter limits (such as temperature and/or humidity) allowed for module function operation. etc.

In some embodiments, the module identifiers of all functional modules allowed to be used by the air conditioner and their corresponding module information can be collected in advance, in this way, a module information database can be built based on the collected information. The module information database can be saved in the air conditioner or the cloud. Based on this, the first module information and the second module information here can be obtained by querying the module information database of the air conditioner or the cloud through the module identifiers of the first functional module and the second functional module.

S20, determining a recommended installation location according to the first module information and the second module information, the recommended installation location includes installation locations respectively recommended by the first functional module and the second functional module in the preset area;
The recommended installation location is specifically the position where the air conditioning quality of the air conditioner reaches the best state when both the first functional module and the second functional module are installed in the preset area.

Different first module information and second module information may correspond to different recommended installation locations. The positions of the first functional module and the second functional module corresponding to different recommended installation locations are different, or the first functional module and the second functional module corresponding to different recommended installation locations have different relative positions (distance and/or direction) to the air outlet or the air inlet.

In some embodiments, the arrangement rules of the functional modules in the preset area can be established in advance, and the recommended installation locations corresponding to the current first module information and the second module information are determined based on the arrangement rules.

S30, outputting installation prompting information according to the recommended installation location.

The installation prompting information can be output in at least one of display, sound, light and other prompt modes. Specifically, the smart large screen provided on the air conditioner can be controlled to display the recommended installation location determined above in the form of text and/or patterns.

In some embodiments, the preset area can be divided into a plurality of sub-areas in advance, and each sub-area is used to install a functional module. Based on this, the installation prompting information may include a plurality of sub-areas and the functional modules recommended for installation in each sub-area.

The output of the installation prompting information allows the user to decide whether to adjust the target installation locations of the first functional module and the second functional module and when is the timing of the adjustment based on the output installation prompting information.

The present application provides an installation prompting method. In the method, a recommended installation location is determined according to the information of a first functional module to be installed in a preset area of an air conditioner and the information of a second functional module currently installed in the preset area. The installation prompting information is output accordingly, so that the user can know how to accurately install the first functional module and the second functional module based on the installation prompting information, which is conducive to improving the performance of each functional module. The accuracy of the installation location on the air conditioner enables the performance of each functional module to coordinate with each other, and effectively improves the effect of the air conditioner in improving indoor air quality.

In these embodiments, the completed transaction specifically refers to the state in which the first functional module has completed the online purchase and has not shipped the product. In other embodiments, the completed transaction may also be a state in which the first functional module has completed the online purchase and received the goods. For example, the user can purchase the first functional module through the smart large screen installed on the air conditioner. When the air conditioner receives the information returned by the server that the first functional module is paid, it can determine that the first functional module is in the preset state.

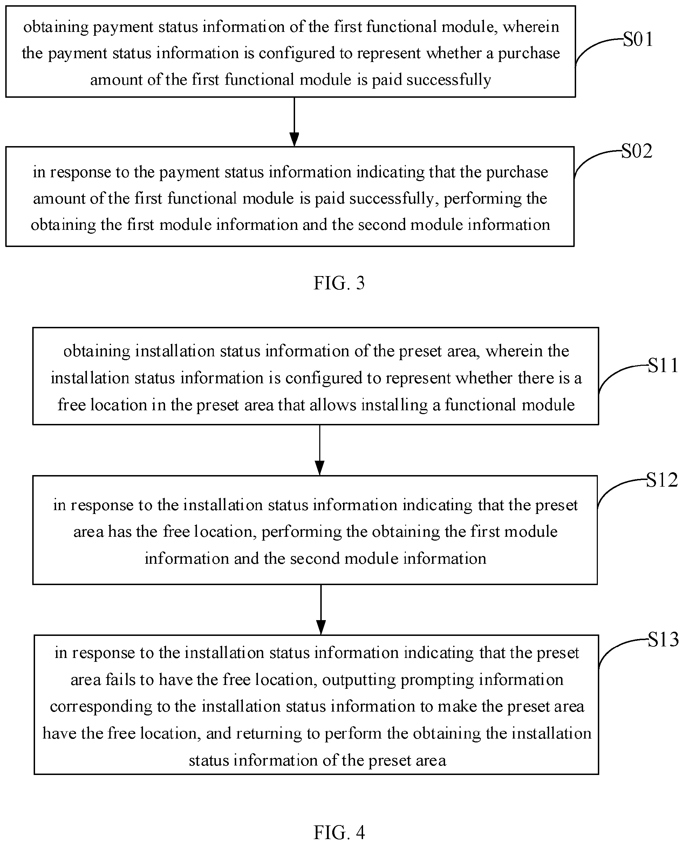

In some embodiments, as shown in FIG. 3, the installation prompting method further includes:
S01, obtaining payment status information of the first functional module, the payment status information is configured to represent whether a purchase amount of the first functional module is paid successfully;
When the purchase instruction from the first functional module is received, the payment prompting information is output and the payment status information returned by the payment prompting information is obtained;

The air conditioner can be equipped with a smart large screen, and users can purchase the first functional module by controlling the smart large screen. Specifically, the smart large screen can display information about functional modules available for purchase; after obtaining user operation instructions returned by the smart large screen based on the displayed information and if the obtained user operation instructions are purchase instructions for the first functional module, it can be determined that the purchase instruction of the first functional module is received.

The payment prompting information specifically includes information used to prompt the payment channel, so that the user can complete the payment of the first functional module based on the prompting information. In these embodiments, the output payment prompting information is to display the payment QR code, so that the user can scan the displayed payment QR code through a mobile phone or other mobile terminal to complete the payment of the first functional module. In other embodiments, the payment prompting information may also includes displaying a payment link, so that the user can click the payment link to enter the corresponding payment interface and input information to complete the payment of the first functional module.

The payment status information is obtained within the preset time period after the payment prompting information is output. Specifically, if the information that the purchase amount of the first functional module has been successfully paid is received from the server within a preset time period after the payment prompting information is output, it can be determined that the payment status information is that the purchase amount of the first functional module has been successfully paid. If the information that the purchase amount of the first functional module failed to be paid is received from the server within the preset time period after the payment prompting information is output, or the information that the purchase amount of the first functional module has been successfully paid is not received from the server, then it is determined that the payment status information is that the purchase amount of the first functional module has not been paid successfully.

S02, in response to the payment status information indicating that the purchase amount of the first functional module is paid successfully, performing the step of obtaining the first module information and the second module information.

In these embodiments, through the above methods, when the user purchases the required functional modules and completes the payment, he or she can quickly know the correct matching installation locations recommended of the purchased functional modules and the functional modules currently installed in the air conditioner. In this way, users can receive the purchased functional modules and install them accurately according to the recommended installation locations, thereby ensuring that each functional module operates in a coordinated manner to effectively improve the air conditioning quality of the air conditioner.

In some embodiments, after the step S01, the method further includes: in response to the payment status information indicating that the purchase amount of the first functional module is paid successfully, displaying the payment status information and a request interface corresponding to the recommended installation location; and in response to a request instruction of the recommended installation location input through the request interface, performing the step of obtaining the first module information and the second module information.

In some embodiments, the request interface is specifically used to obtain the user's request instruction for requesting the recommended installation location input by users. In these embodiments, the request interface is a request link; in other embodiments, the request interface may also be a QR code, etc. The request instruction is specifically an instruction for requesting the recommended installation location.

When it is detected that there is a preset operation (such as single click, double click or long press, etc.) based on the request interface on the smart large screen, it can be determined that the request instruction exists.

In some embodiments, when there is a request instruction, the smart large screen on the air conditioner can be controlled to switch from the current display interface to the preset interface corresponding to the recommended installation location, and then output installation prompting information on the preset interface.

In these embodiments, after the first functional module is purchased successfully, if there is a request instruction for the recommended installation location, it indicates that the user has the need to view the recommended installation location of the functional module. At this time, the installation prompting information can be output based on the above steps S10 to S30. output to ensure that the installation prompting information can match the actual needs of users.

In some embodiments, as shown in FIG. 4, based any one of the above-mentioned embodiments, the installation prompting method further includes:
S 11, obtaining installation status information of the preset area, the installation status information is configured to represent whether there is a free location in the preset area that allows installing a functional module;

In some embodiments, the preset area can be divided into a plurality of sub-areas, and each sub-area is used to install a functional module. Based on this, the current module detection information corresponding to each sub-area can be obtained, and based on the module detection information, it is determined whether there is a functional module in the corresponding sub-area. If there is a functional module in each sub-area, the installation status information indicates that there does not exist a free location to allow the installation of the functional module; if there is no functional module in any sub-area, the installation status information indicates that there exists a free location to allow the installation of the functional module.

S12, in response to the installation status information indicating that the preset area has the free location, performing the step of obtaining the first module information and the second module information; and
S 13, in response to the installation status information indicating that the preset area fails to have the free location, outputting prompting information corresponding to the installation status information to make the preset area have the free location, and returning to perform the step of obtaining the installation status information of the preset area.

In these embodiments, the prompting information corresponding to the installation status information can be output by display or sound broadcast, for example, it can be displayed on the above-mentioned default interface. The prompting information can be used to prompt the user to disassemble the unused functional modules in the preset area so that free locations will appear in the preset area. Specifically, after the prompting information is output, the system can return at a set time interval to obtain the installation status information of the preset area again.

In these embodiments, the above method can ensure that the recommended installation location is determined only when there is a free location on the air conditioner, thereby ensuring the validity and accuracy of the output recommended installation location, and ensuring that the functional modules installed on the air conditioner meet the needs of the user. At the same time, each functional module that matches the user's needs can be installed accurately, so that the air conditioning quality of the air conditioner can be effectively improved and accurately matched with the user's needs.

It should be noted that when the installation prompting method also includes steps S01 and S02, after step S01, if the payment status information indicates that the purchase amount of the first functional module is paid successfully, then steps S 11 to steps S13 are performed.

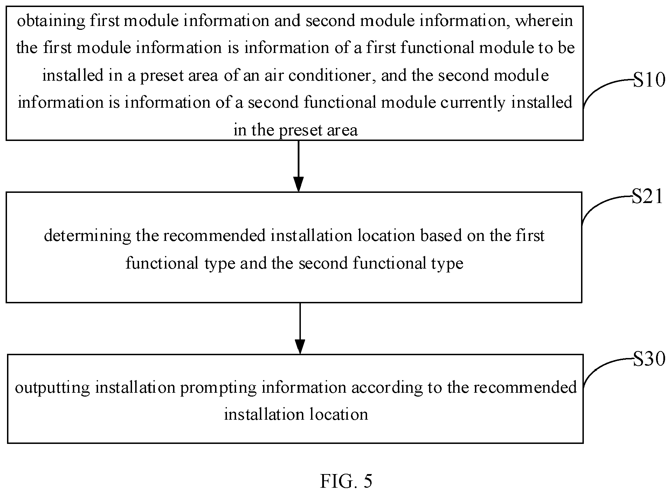

In some embodiments, the first module information includes a first functional type of the first functional module, and the second module information includes a second functional type of the second functional module. As shown in FIG. 5, the step S20 includes:
S21, determining the recommended installation location based on the first functional type and the second functional type.

Different first functional types and second functional types correspond to different recommended installation locations. Based on this, a correspondence relationship between combinations of different functional types and recommended installation locations can be established in advance, and based on the correspondence relationship, the recommended installation locations corresponding to the current first functional type and the second functional type can be determined.

In these embodiments, the recommended installation location is determined based on the functional types corresponding to the first functional module and the second functional module, thereby ensuring that the first functional module and the second functional module are installed and operate in the preset area according to the recommended installation location. The function realization of each functional module will not affect each other, ensuring the accuracy of the the recommended installation location output and ensuring that the air conditioning quality of the air conditioner can be maximized when both the first functional module and the second functional module are installed on the air conditioner.

In some embodiments, if the first functional type and the second functional type includes a humidification type and a purification type, determining a first target location as a first recommended installation location of one of the first functional module and the second functional module that belongs to the humidification type, and determining a second target location as a second recommended installation location of one of the first functional module and the second functional module that belongs to the purification type. The recommended installation location includes the first recommended installation location and the second recommended installation location, and a distance between the first target location and an air outlet of the air conditioner is smaller than a distance between the second target location and the air outlet.

The functional types of modules such as formaldehyde removal module, dust removal module, odor removal module, and sterilization module all belong to the purification type.

For example, when the first functional type is humidification type and the second functional type is purification type, in the recommended installation location, the distance between the installation location corresponding to the first functional module and the air outlet is smaller than the distance between the installation location corresponding to the second functional module and the air outlet. distance; for another example, when the second functional type is humidification type and the first functional type is purification type, the distance between the installation location corresponding to the first functional module and the air outlet is greater than the distance between the installation location corresponding to the second functional module and the air outlet; for another example, there are more than one second functional modules, at least one of the more than one second functional modules is a purification type, one of the more than one second functional modules is a humidification type, and the first functional module is a purification type. The distance between the installation location corresponding to the first functional module of the humidification type and the air outlet is greater than the distance between the installation location corresponding to the second functional module of the purification type or the first functional module of the purification type and the air outlet.

Based on this, it is helpful to prevent high humidity from affecting the purification function of the purification module, thereby ensuring that the air purification and humidification effects of the air conditioner can reach the best state.

In some embodiments, if the first functional type and the second functional type includes a dehumidification type and a purification type, determining a first target location as a first recommended installation location of one of the first functional module and the second functional module that belongs to the dehumidification type, and determining a second target location as a second recommended installation location of one of the first functional module and the second functional module that belongs to the purification type. The recommended installation location includes the first recommended installation location and the second recommended installation location, and a distance between the first target location and an air outlet of the air conditioner is smaller than a distance between the second target location and the air outlet.

Based on this, the impact of humidity on the purification function of the purification module is effectively reduced, ensuring that the air purification effect and dehumidification effect of the air conditioner can reach the best state.

Furthermore, in other embodiments, when the first functional type and the second functional type include more than one same functional type, the two functional modules of the same functional type in the first functional module and the second functional module are provided at intervals in the recommended installation location.

In some embodiments, after step S30, the method further includes:
S40, obtaining user feedback information corresponding to the installation prompting information;

After the installation prompting information is output on the smart large screen, the user can input the user feedback information through the smart large screen.

User feedback information may include agreement to install according to the recommended installation location, disapproval to install according to the recommended installation location, or location adjustment information corresponding to the recommended installation location.

S50, determining a reference installation location of the first functional module and the second functional module in the preset area according to the recommended installation location and the user feedback information.

Different recommended installation locations and different user feedback information can correspond to different reference installation locations. Specifically, it can be determined whether to adjust the recommended installation location based on user feedback information, and if it is determined that the recommended installation location needs to be adjusted (for example, the user feedback information indicates that they do not agree to install according to the recommended installation location or the location adjustment information corresponding to the recommended installation location), the adjustment parameters of the recommended installation location is determined according to user feedback information, the recommended installation location is adjusted according to the adjustment parameters to obtain the reference installation location. When it is determined that there is no need to adjust the recommended installation location (such as user feedback information agrees to install as recommended installation location), the recommended installation location is directly used as the reference installation location.

In some embodiments, if the user feedback information includes location adjustment information corresponding to the recommended installation location, obtaining the reference installation location after adjusting the recommended installation location according to the location adjustment information; and if the user feedback information does not include location adjustment information corresponding to the recommended installation location, determining the recommended installation location as the reference installation location.

S60, if both the first functional module and the second functional module are installed in the preset area, detecting an actual installation location corresponding to the first functional module and the second functional module; and
In some embodiments, the module detection information corresponding to each of the above sub-areas is obtained, and it can be determined based on more than one module detection information whether the first functional module and the second functional module are both installed in the preset area.

When it is determined that both the first functional module and the second functional module are installed in the preset area, the location set formed by the current locations of the first functional module and the second functional module can be determined as the actual installation location based on the module detection information.

S70, if the reference installation location fails to match the actual installation location, outputting an alarm message.

The alarm information can be used to remind the user that the functional module is installed incorrectly, so that the user can adjust each functional module in the preset area to the correct installation location.

When the reference installation location does not match the actual installation location, in addition to outputting alarm information, the air conditioner can also be controlled to prohibit the operation of functional modules to prevent the functional modules from operating in the wrong position because operation in the wrong position will affect the life of the module and the air conditioning effect of the air conditioner.

In these embodiments, through the above methods, the reference installation location is determined based on the user's feedback information on the recommended installation location, and whether there is a module installation error during the user's installation process is determined based on the reference installation location, thereby ensuring that the functional modules are installed accurately and the air quality adjusted by the air conditioner accurately matches the actual needs of users.

In order to better understand the technical solutions involved in the above embodiments, two specific application examples based on the above embodiments are provided below:
Application Example 1: There are 6 slots in the preset area of the air conditioner. The user decides to purchase a formaldehyde removal module. At this time, he enters the formaldehyde removal module purchase interface and a purchase QR code appears; the user completes the payment using a mobile phone or other payment terminal; the screen software detects that the payment has been successful and jumps to the payment success interface (this interface contains the entrance to view the best installation sequence); the user clicks to view the best installation sequence and jumps to the recommended installation sequence interface; if it is detected that the slot locations 5 and 6 are free and meet the recommended conditions, combining the currently inserted modules and the newly purchased module type: formaldehyde removal module, the optimal installation sequence is comprehensively calculated as: location 1 for humidification module, location 2 for odor removal module, location 3 for formaldehyde removal (newly purchased) module, location 5 for sterilization module, location 6 for odor removal module, and location 4 being free; based on the calculation results, the recommended modules for each location of the device are displayed on the screen interface.
Application Example 2: There are 6 slots in the preset area of the air conditioner. The user decides to purchase a formaldehyde removal module. At this time, he enters the formaldehyde removal module purchase interface and a purchase QR code appears; the user completes the payment using a mobile phone or other payment terminal; the screen software detects that the payment has been successful and jumps to the payment success interface (this interface contains the entrance to view the best installation sequence); the user clicks to view the best installation sequence and jumps to the recommended installation sequence interface; if it is detected that there is no free location, thereby not meeting the recommendation conditions, the user is reminded through the prompt "there is no available position, please extract the module that needs to be replaced"; the user manually extracts the sterilization module; after that, if it is detected that location 6 is free, combining the currently inserted module and the newly purchased module type: for formaldehyde removal, the optimal installation sequence is comprehensively calculated as: location 1 for humidification module, location 2 for odor removal module, location 3 for dust removal module, location 4 for dust removal Pro module, location 5 for formaldehyde removal (newly purchased) module, location 6 for formaldehyde removal module (in use); based on the calculation results, the recommended modules for each location of the device are displayed on the screen interface.

In some embodiments, the present application further provides a computer readable storage medium. The installation prompting program is stored on the computer readable storage medium, and when the installation prompting is executed by a processor, steps of any one of the above-mentioned installation prompting method are implemented.

Furthermore, it should be noted that, herein, the terms "comprising", "including" or any other variations thereof are intended to encompass non-exclusive inclusions, so that a process, method, article or system literally including a series of elements includes not only those elements, but also other elements not expressly listed or inherent to such a process, method, article or system. Without further limitation, an element qualified by the phrase "including a..." does not preclude the existence of additional identical elements in the process, method, article or system that includes the element.

From the description of the above embodiments, those skilled in the art can clearly understand that the methods of the above embodiments can be implemented not only by means of a software plus a necessary general hardware platform, but also by means of a hardware. However in many cases the former is better. Based on this understanding, the technical solutions of the present disclosure in essence or the parts that make contributions to the related art can be embodied in the form of software products. The computer software products is stored in a computer readable storage medium (such as a read-only memory/random access memory, a magnetic disk or an optical disk, etc.), and includes several instructions to make a terminal device (such as a mobile phone, a computer, a server, or a network device, etc.) execute the methods described in the various embodiments of the present disclosure.

It should be noted that the above are only some embodiments of the present application, and do not limit the patent scope of the present application. Under the inventive concept of the present application, equivalent structural transformations made by using the contents of the description and drawings of the present application, or direct/indirect application in other related technical fields are included in the patent protection scope of The present application.

## Claims

1. An installation prompting method, comprising:
obtaining first module information and second module information, wherein the first module information is information of a first functional module to be installed in a preset area of an air conditioner, and the second module information is information of a second functional module currently installed in the preset area;
determining a recommended installation location according to the first module information and the second module information, wherein the recommended installation location comprises installation locations respectively recommended by the first functional module and the second functional module in the preset area; and
outputting installation prompting information according to the recommended installation location.

2. The installation prompting method according to claim 1, further comprising:
obtaining payment status information of the first functional module, wherein the payment status information is configured to represent whether a purchase amount of the first functional module is paid successfully; and
in response to the payment status information indicating that the purchase amount of the first functional module is paid successfully, performing the obtaining the first module information and the second module information.

3. The installation prompting method according to claim 2, wherein after the obtaining the payment status information of the first functional module, the method further comprises:
in response to the payment status information indicating that the purchase amount of the first functional module is paid successfully, displaying the payment status information and a request interface corresponding to the recommended installation location; and
in response to a request instruction of the recommended installation location input through the request interface, performing the obtaining the first module information and the second module information.

4. The installation prompting method according to claim 1, further comprising:
obtaining installation status information of the preset area, wherein the installation status information is configured to represent whether there is a free location in the preset area that allows installing a functional module;
in response to the installation status information indicating that the preset area has the free location, performing the obtaining the first module information and the second module information; and
in response to the installation status information indicating that the preset area fails to have the free location, outputting prompting information corresponding to the installation status information to make the preset area have the free location, and returning to perform the obtaining the installation status information of the preset area.

5. The installation prompting method according to claim 1, wherein the first module information comprises a first functional type of the first functional module, and the second module information comprises a second functional type of the second functional module;
the determining the recommended installation location according to the first module information and the second module information comprises:
determining the recommended installation location based on the first functional type and the second functional type.

6. The installation prompting method according to claim 5, wherein the determining the recommended installation location based on the first functional type and the second functional type comprises:
if the first functional type and the second functional type comprise a humidification type and a purification type, determining a first target location as a first recommended installation location of one of the first functional module and the second functional module that belongs to the humidification type, and determining a second target location as a second recommended installation location of one of the first functional module and the second functional module that belongs to the purification type;
wherein the recommended installation location comprises the first recommended installation location and the second recommended installation location, and a distance between the first target location and an air outlet of the air conditioner is smaller than a distance between the second target location and the air outlet.

7. The installation prompting method according to any one of claims 1 to 6, wherein after the outputting the installation prompting information according to the recommended installation location, the method further comprises:
obtaining user feedback information corresponding to the installation prompting information;
determining a reference installation location of the first functional module and the second functional module in the preset area according to the recommended installation location and the user feedback information;
if both the first functional module and the second functional module are installed in the preset area, detecting an actual installation location corresponding to the first functional module and the second functional module; and
if the reference installation location fails to match the actual installation location, outputting an alarm message.

8. The installation prompting method according to claim 7, wherein the determining the reference installation location of the first functional module and the second functional module in the preset area according to the recommended installation location and the user feedback information comprises:
if the user feedback information comprises location adjustment information corresponding to the recommended installation location, obtaining the reference installation location after adjusting the recommended installation location according to the location adjustment information; and
if the user feedback information does not comprise location adjustment information corresponding to the recommended installation location, determining the recommended installation location as the reference installation location.

9. An air conditioner, comprising a memory, a processor and an installation prompting program stored on the memory and executable on the processor, wherein when the installation prompting program is executed by the processor, steps of the installation prompting method of any one of claims 1 to 8 are implemented.

10. A computer readable storage medium, having an installation prompting program stored thereon, wherein when the installation prompting program is executed by a processor, steps of the installation prompting method of any one of claims 1 to 8 are implemented.
